# EUROPEAN PATENT APPLICATION

(11) **EP 1 650 987 A1**
(43) Date of publication of application: **26.04.2006**
(21) Application number: 05256186.7
(22) Date of filing: 04.10.2005
(51) Int. Cl.: H04Q 3/00

(54) **Routing transaction capabilities application part messages**

(30) Priority: 19.10.2004 US 969378
(71) Applicant: Hewlett-Packard Development Company, L.P., Houston, TX 77070 (US)
(72) Inventor: Schepers, Paul D., Frisco, TX 75034 (US); Evans, Mark S., Plano, TX 75025 (US); Gerhardt, Alan L., Pittsburg, TX 75686 (US); Hines, Warner Lee, Southlake, TX 76092 (US); Parker, Raymond M., Carrollton, TX 75010 (US); Reeves, Robert L., Plane, TX 75075 (US)
(74) Representative: Exell, Jonathan Mark

(57) **Abstract**

Networks, methods, and devices are provided for handling transaction capabilities application part (TCAP) messages. One device embodiment includes a computing device in a communication network 100 having program instructions storable in a memory 123 and executable by a processor 121. The program instructions receive a protocol identifier from within a transaction capabilities application part (TCAP) message to identify a particular protocol in which to route the TCAP message. In this embodiment, the instructions also route the TCAP message to the particular protocol.

## Description

### Introduction

Intelligent networks (INs) are being used to provide an increasing number of services to communication networks. INs deliver these services to a number of wireless or wireline stations, e.g., a number of communications devices such as phones, PDA's, etc. The service functions that deliver the services to these stations can be separated from the equipment that is providing the switching functionality to the stations. One benefit of this separation is that network providers do not have to perform major modifications on multiple switches when a new service is introduced.

For instance, a switch in a publicly switched telephone network (PSTN) connects a call signal, or other media data traffic, on one media channel to another available media channel in order to continue routing the signal to the intended destination. A switch can perform its function based, for example, on Signaling System 7 (SS7) control signals. The SS7 can set up and tear down a call, handle the routing decisions, and support telephony services such as 800 numbers, call forwarding, caller ID, local number portability (LNP), etc.

INs can provide enhanced voice, video, and data services and dynamic routing capabilities by using a number of different networks. That is, the actual voice call can be transmitted over a circuit-switched network, but the signaling, e.g., control signal transmission, can be accomplished on a separate SS7 packet-switched network.

An originating switch in a local exchange carrier (LEC) network may determine when processing for services is requested for a telephone call. When processing for services is requested, the originating switch opens a dialogue with another media platform, e.g., a service control gateway, and exchanges protocol messages embedded within SS7 protocol messages with the service control gateway.

Since changes in the services provided do not typically affect or use the functionality of the switching system, by keeping the programs and/or data from the switching and services functions separate, the separation allows changes to be made to one without influencing the other. Additionally, since the service functions are separate, they can be programmed to be used by a variety of communication protocols used by a network.

For example, protocols are defined to permit interaction between switching equipment and other equipment, e.g., IN nodes, which contain the service logic and service data. Networks can use one or more protocols to handle different data formats and data for different purposes. Protocol examples include, but are not limited to, intelligent network application part (INAP), mobile application part (MAP), customized applications for mobile network enhanced logic (CAMEL), and capability set (CS) protocols, to name a few.

The transaction capabilities application part (TCAP) is defined as a layer in the SS7 protocol stack that defines the messages and protocol used to communicate between applications (deployed as subsystems) in SS7 nodes, such as switching points/centers, control points, end points, and the like. The TCAP works to send and receive messages from a variety of different protocols including those discussed above. In the SS7 network, a TCAP is used to add transaction-based functionality to the Public Switch Telephone Network (PSTN) and to mobile communication networks. TCAP messaging is defined within the SS7 specifications as a communications protocol that maintains dialogue processing, activates remote processes or features, and transfers switched-based information from one telephony application to another.

TCAP protocol is used to communicate messages between different entities, such as databases and end stations. For example, TCAP messages are typically used for communications between service switching points (SSPs) and service control parts (SCPs) within a communication network or between networks.

The TCAP protocol handles numerous processing functions within the PSTN and mobile networks such as 800 or free phone processing, 911 emergency service, repeat dialing, calling card services, call forwarding, call waiting, call return, etc. For example, an SSP sends a TCAP query to determine the routing number associated with a dialed 800/888 number or to check the personal identification number (PIN) of a calling card user. In mobile networks(e.g., networks operating under American National Standards Institute's standard number 41 (ANSI-41), Interim Standard number 41 (IS-41) or Global System for Mobile (GSM) communications networks, among others), a TCAP message establishes connectivity between mobile switches and databases to support user authentication, equipment identification, roaming, and other such functions.

Although service application programs can be written to work with a number of protocols, current service application programs cannot identify from which protocol messages are received when TCAP messaging is used to communicate the messages. This is because the messages are routed to and from a service application program using point code to provide the routing directions.

Point code is a SS7 address of a network component, used to identify the signaling point in SS7 messages. Point code typically includes location information such as a network identifier. However, this information does not identify the protocol that is being used to communicate the information.

Since services may be provided for communications using different protocols, in order for the service application to provide the correct interaction with a protocol, the services typically have a single service logic program (SLP) that can interpret the information being communicated between the service and the switch from all available protocols. As such, the SLP is typically a large program where small pieces of the program are used to deal with each type of protocol interaction. Invoking and utilizing this program can use substantial processor and memory resources to operate.

### Brief Description of the Drawings

Figure 1 is a block diagram illustrating an example of a communication network embodiment.
Figure 2 illustrates block diagram example of the communication flow within the network of Figure 1.
Figure 3 is an example illustration of the interaction between a number of network functions and service functions.
Figure 4 illustrates a method embodiment for routing TCAP messages.
Figure 5 illustrates another method embodiment for routing TCAP messages.

### Detailed Description

Embodiments of the present invention provide for routing of TCAP messages. According to various embodiments, a computing device, such as in a communication network, can include program instructions storable in memory and executable by a processor. The program instructions can include instructions executable to receive a protocol identifier from within a transaction capabilities application part (TCAP) message to identify a particular protocol to use in routing the TCAP message. The instructions can also execute to route the TCAP message to the particular protocol. In this way, TCAP messages can be handled in a protocol-specific manner by a number of protocol-specific service logic programs.

The computing device can include program instructions to route subsequent TCAP messages to a particular protocol-specific service logic program. The routing is based upon the received protocol identifier. Additionally, in some embodiments, the protocol identifier in a first TCAP message is used to route one or more subsequent messages to a particular service logic program.

The protocol identifier can be provided with or in a TCAP message. For example, the protocol identifier can be provided in an application context field in the TCAP message. In some embodiments, the application context field can be an unused field. In such instances, the field can be empty when not used to provide the protocol identifier.

Additionally, in some embodiments, the application context field can be used for other purposes and, in such cases, one or more particular codes can be used to identify the different protocols from other information that may be provided in the application context field. In these cases, the protocol information can be identified in various manners.

For example, the protocol identifier can be checked against a list of various identifiers corresponding to a number of protocols. If the protocol identifier, accompanying the TCAP message, corresponds to an identifier on the list, then the message is routed according to program instructions associated with the matched identifier. If the information within the application context field does not match one of the protocol identifiers listed, then the information can be disregarded.

The receiving and routing functionality of these program embodiments can be provided by various computing devices of a communication network. For example, a computing device used as a service control point (SCP) can be a suitable device for providing such functionality. Additionally, the receiving and routing functions can be provided in connection with other functions provided within the network. For example, the program instructions for receiving and routing can be associated with service control functions (SCFs) of a network.

The present invention also includes various communication network embodiments. Communication network embodiments can include a number of service switching points (SSPs), a number of signal transfer points (STPs) coupled to one or more of the SSPs, and a number of SCPs coupled to one or more of the STPs. The SCPs can include executable program instructions associated with a SCF.

The program instructions can be executable to route a TCAP message to a particular protocol based upon a protocol identifier from the TCAP message. The protocol identifier can be received from the TCAP message or the TCAP message can be accessed to allow program instructions to identify the protocol identifier. The protocol identifier can be contained in a particular field of the TCAP message. For example, the application context field can contain the protocol identifier. In such cases, a bit or string of bits can be used to provide the protocol identification information.

The protocol identifier can be used to identify the protocol of a message to a service or group of services. For example, some IN systems utilize Parlay services which have a number of service applications provided within the Parlay environment.

Parlay services refer to a set of web-services that can be described using web services definition language (WSDL) by application and service creation designers. The Parlay services can include Parlay APIs (not shown) which are designed to enable creation of telephony applications as well as to enable information technology applications.

Parlay services accommodate the development of next generation network applications. The interaction between an application incorporating a Parlay web service and a server implementing the web service, e.g., a service capability server (SCS) or service control gateway (SCG) implementing the embodiments described herein, can be performed using an extensible markup language (XML) based message exchange through the high speed bus, for example. Parlay services are not network equipment specific, and are not network specific where a particular capability is relevant to more than one type of network.

One of ordinary skill in the art will appreciate upon reading this disclosure that Parlay applications to invoke Parlay services, and/or other service application layers, can interact with an SS7 network including the use of a SCF in a SCP, according to the embodiments described above.

The protocol identifier can be used to identify which protocol is requesting the service in order to provide the correct response to the request. This will allow a Parlay service application to use a particular protocol-specific SLP to provide the service.

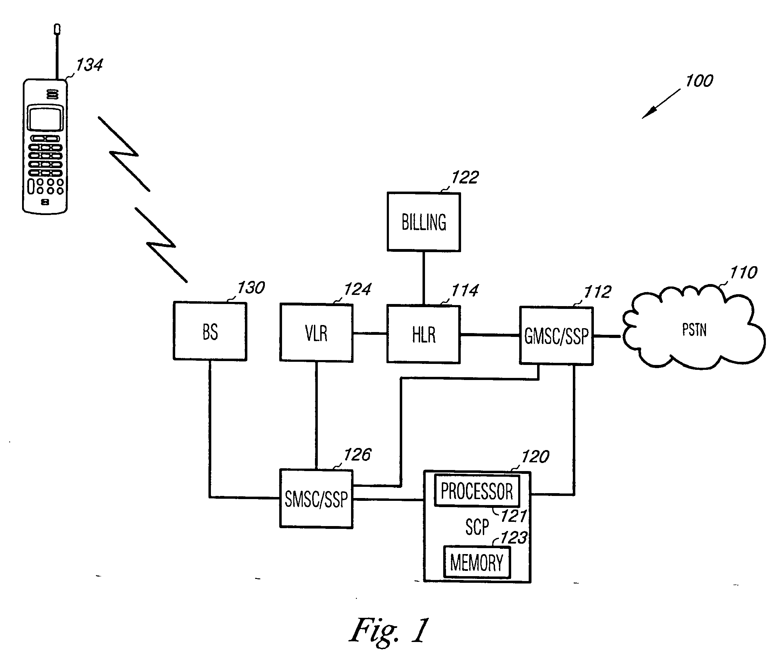

Figure 1 illustrates one example of some of the physical components (also referred to as physical entities (PEs)) in a telecommunications network. In this example, a telecommunications network 100 is illustrated. Wireless telecommunications networks such as shown in Figure 1 can be operated by an industry wireless provider or operator, e.g., Cingular, Vodafone, Verizon, Nextel, Sprint, and T-Mobile. Such wireless networks can provide cellular/PCS (personal communication service) services like call origination and call delivery, streaming data, text messaging, etc., to a mobile device or handset 134.

These wireless networks 100 include one or more mobile switching centers (MSCs), e.g., gateway MSC/service switching point (GMSC/SSP) 112 and serving MSC/service switching point (SMSC/SSP) 126 described in more detail below, which are connected to a plurality of base stations (BS) 130 that are dispersed throughout the geographic area serviced by the network 100. Each MSC 112 and 126 is responsible for, among other things, establishing and maintaining calls between mobile devices and/or between a mobile device and a wireline device which is connected to the wireless network from a local and/or long-distance network, e.g., the regional Bells, Sprint, MCI, etc, in the public switched telephone network (PSTN) 110. Network devices in a wireline network can provide similar functions to those discussed with respect to Figure 1 and, accordingly, embodiments of the present invention can be utilized in wireless, wireline, or combination wireline-wireless networks.

A MSC 112/126 is a telephone switch specialized for wireless and mobility support. As mentioned above, a MSC 112/126 performs various functions, including mobility management, call handoffs, call admission, call control, resource allocation, and so forth. A call and/or other data can be relayed from the MSC 112/126 to base stations 130. This relay can be via a wireless communication interface (e.g., via an ANSI, GSM, or other standards interface, etc.) to the mobile device 134.

In the embodiment of Figure 1, MSCs 112 and 126 are designated as a gateway MSC 112 (GMSC) and a serving MSC (SMSC) 126. This designation is provided to illustrate that a MSC can provide various functions. For example, a GMSC is used to receive an initial communication from a mobile device or from outside the network, while a SMSC is used to provide the actual routing to a mobile device to which the communication is directed. In some cases, the GMSC and the SMSC can be provided by the same MSC.

Additionally, the MSCs 112 and 126 of the embodiment of Figure 1 also act as SSPs. A SSP directs requests services through the network 100. For example, a service request can be sent from a mobile device 134 and the SSPs 112 and 126 can be used to route those requests to a service application.

As shown in Figure 1, a SCP 120 can be used to provide access to service applications. The SCP 120 can receive requests and forward those requests to the proper service application. In many networks, TCAP messages are used to communicate requests and responses between the SSPs 112/126 and the SCP 120. Although the SSPs are shown with the MSCs and the SCP is an independent entity in the embodiment shown in Figure 1, SSPs and SCPs can reside in the same computing device, such as a server, and can reside with functional features other than the MSC, such as with a home location register (HLR) 114 or visiting location register (VLR) 124, for example.

Likewise, a computing device can also include a processor for executing program instructions, memory for storing program instructions, and data for use in providing the various network functions. For example, SCP 120 includes a processor 121 and memory 123. As the reader will appreciate, each of the physical components of the network can include processor and memory resources, e.g., as illustrated with respect to the SCP component 120.

Various network functions include, but are not limited to, HLR, VLR, SSP, SCP, billing (e.g., billing device 122), MSC, and the like. For example, a BS 130 may transmit subscriber identity information to a SMSC 126, via communication line, where it can be stored in a database associated with the SMSC 126. Messages such as a MAP based signals, e.g., a registration notification signal (IS-41 message) or location update signal (GSM message), can further be transmitted from the SMSC 126 to a HLR 114. As shown in Figure 1, the GMSC 112 can serve as a network switch for connecting to the public switched telephone network (PSTN) 110.

As shown in Figure 1, a network 100 can be connected to a number of different gateways, such as MSCs, service control gateways (SCGs), service capability servers (SCSs), etc., across multiple different network types, e.g., ANSI, GSM, Internet, etc.

As one of ordinary skill in the art will appreciate upon reading this disclosure, the multiple physical components, which are described above and elsewhere herein, can include both hardware and software resources. Among the hardware resources, a component can include logic in the form of one or more processors, field programmable gate arrays (FPGAs), firmware, etc., as well as memory. Memory can include non-volatile and volatile memory such as Flash memory, read only memory (ROM), random access memory (RAM), and optically readable memory, etc.

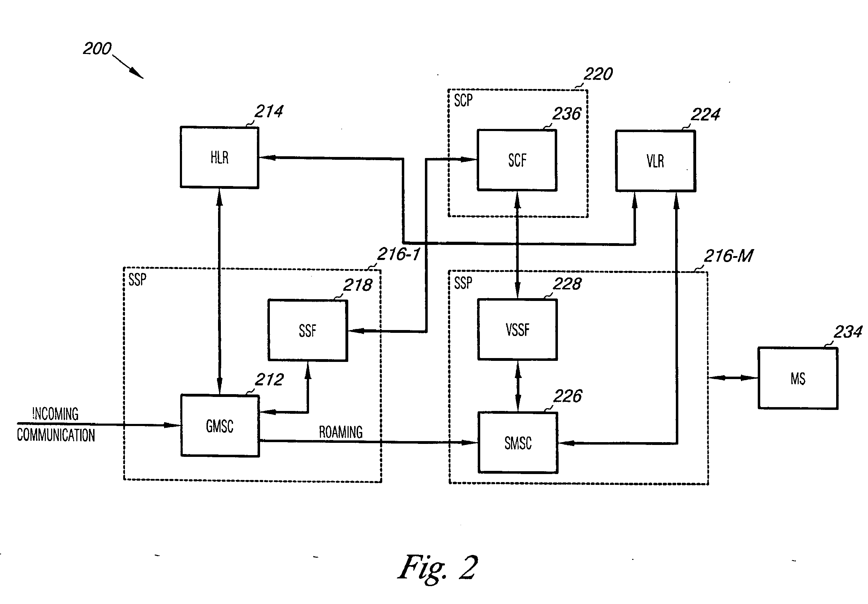

Memory can store computer readable and executable instructions related to a variety of functions and telecommunication service applications executable on and by the physical components described herein. The programs operate as functional entities (FEs) described in more detail in connection with Figure 2. A processor can operate on computer executable instructions as part of the control logic for controlling operations of a component.

A SCP, such as SCP 120, in a SS7 telephone network provides an interface to databases, which may reside within the SCP node or in other nodes accessible on or through a network. As noted, the SCP may also be combined with the STP to route messages. The SSP sends SS7 messages to SCPs to retrieve subscriber and routing information as well as other information from various databases which support such features as 800 and 900 numbers, calling card validation, collect and third-party billing calls as described above.

The SCP includes computer executable instructions to provide service control functionality as discussed in more detail in connection with Figure 2. These SCFs can be requested by various protocols. According to various embodiments, program instructions can execute in association with a SCP to determine which protocol is being used and to route the request to an appropriate protocol-specific SLP for a particular service application. In various embodiments, the protocol-specific SLPs are part of a service logic execution environment (SLEE) implemented as part of the SCP 120. However, the embodiments of the present invention are not limited to this example use.

Figure 2 provides an embodiment of a communication system which is useful to illustrate the flow of messages in an IN. In the embodiment of Figure 2, a number of physical components of a SSP 216-1 to 216-M provide stored program control switches, e.g., computer executable instructions, that interface to the SS7 signaling network 200. The designator "M" is used to illustrate that a number of such SSPs can be created, however, the illustration of a number of SSPs 216, should not be viewed as limiting the quantity of the other components shown and described herein.

The embodiment of Figure 2 illustrates a number of SSPs 216-1 and 216-M. In the example illustrated, one SSP 216-1 includes the GMSC 212 functionality and SSF 218. As used herein SSFs include executable instructions to support IN triggering during call processing and to access IN functionality. The SSFs recognize IN service calls and route the appropriate queries to a SCF. As discussed above, the SCF can reside in a SCP as discussed in more detail below. The routed request can be directed via the SS7 network through one or more STPs.

In the example illustrated, SSP 216-M is used by a roaming mobile station 234 (MS), e.g., a number of mobile devices or a connection to a number of mobile devices, and includes the SMSC 226 and a visiting service switching function (VSSF) 228. Although the discussion below is generally directed to the interaction of the SSP 216-1, and its components, with SCP 220 and HLR 214, the interaction with the SSP 216-M, and its components, and the VLR 224 with the SCP 220 can be described in a similar manner and, accordingly, will not be discussed in the same level of detail.

As shown in the embodiment of Figure 2, the SSP 216-1 can include program instructions executable to perform call control functions. The SSP 216 can also include program instructions executable to perform SSFs 218. As one of ordinary skill in the art will appreciate upon reading this disclosure, the physical component of an SSP 216 can associate with the software functional components (e.g., FEs) in a distributed manner, e.g., the program instructions can be distributed across multiple network devices, such as in a local area network (LAN), a wide area network (WAN), and/or the Internet.

The physical component of an SCP 220 provides stored program commands, e.g., computer executable instructions that are interfaced to the STP nodes (not shown) within the SS7 signaling network 200. SCP commands are used by the SSPs 216-1 to 216-M to process calls. The SCP 220 is a transaction-processing entity that provides call-handling information in response to SSP 216-1 queries. As shown in the embodiment of Figure 2, the SCP 220 includes program instructions executable to perform a SCF 236 and can include program instructions executable to perform service data functions. The SCF 236 includes instructions to execute IN service logic and influence call processing on the switch, e.g., SSPs, via its interface to the SSF 218 through the SS7 network 200.

Figure 2 also provides an illustration of a service request, such as call forwarding to a MS 234. In this example, a communication is received by the GMSC 212 requesting that a call be forwarded to the MS 234. The GMSC 212 queries the HLR 214 to find the location of the MS 234 on the network. The SSF 218 forwards the request for call forwarding service on to the SCP 220. The SCF 236 within the SCP 220 receives the request. The GMSC 212 receives notification that the MS 234 is located within the area of the VLR 224. The GMSC 212 transfers the request to SMSC 226 and contact is made with the MS 234. The call service of call forwarding is then implemented through communication of the SCF 236 and the VSSF 228 to complete the forwarding of the call to MS 234.

When a service, such as call forwarding or other such services, as have been mentioned above, is requested, a TCAP message provides the request from an SSF 218 to the SCF 236 in a SCP 220. In order for the request to be fulfilled, the SCF 236 invokes a SLP instance. A SLP instance is created to handle a communication session, e.g., message exchange. The message exchange in this example is a request and response to the request. However, a session can include various numbers of messages between computing devices.

The reader will appreciate that within the network environment 200 there is a finite amount of memory that can be used for SLP instances and that each SLP instance has a certain static memory footprint and that the larger the program that the SLP is, the larger the memory footprint that will be used. Accordingly, smaller SLP instances will allow for more memory to be used for other purposes.

By using a number of protocol-specific SLPs, the SLP instances created will be smaller than when a single general SLP was invoked for use with various protocols. In addition, the processor resources used with respect to the single general SLP will can also be reduced.

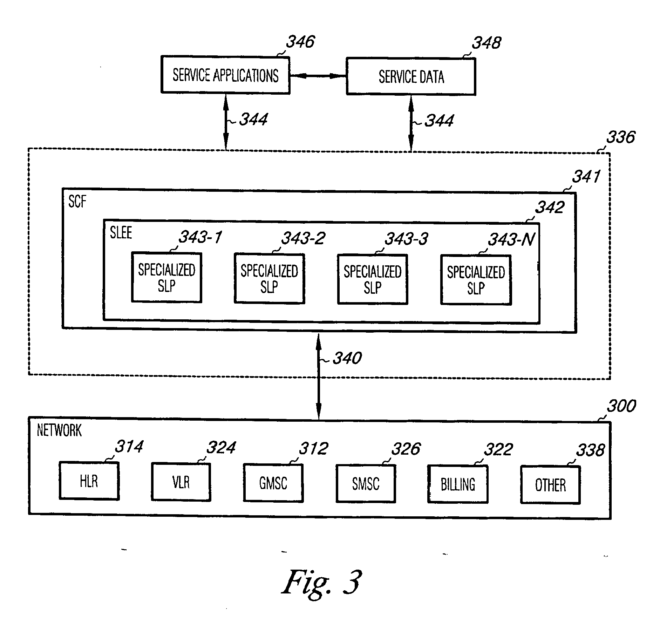

Figure 3 is an example illustration of the interaction between a number of network functions and service functions. In Figure 3, a number of functions within network 300 interact with a number of services provided through an SCP 336. The network functions HLR 314, VLR 324, GMSC 312, SMSC 326, billing 322, and other functions 338 can communicate requests for services including requests for data, communications between devices or networks, and the like. These requests and the responses to such requests can be provided by a number of different protocols, such as INAP, MAP, CAMEL, CS protocols, and the like.

The requests are directed to the SCP 336 via TCAP messages 340. In the various embodiments, the TCAP messages 340 contain a protocol identifier that is used to identify which protocol-specific SLP 343-1, 343-2, 343-3, 343-N within a service logic execution environment (SLEE) 342 is to be used during the communication session. The designator "N" is used to illustrate that a number of such SLPs can be created, however, the illustration of a number of SLPs 343 should not be viewed as limiting the quantity of the other components shown and described herein. The SLEE is the environment in which SLP instances are created. The SLEE 342 typically exists within the SCF 341 on the SCP 336. Based upon the protocol identifier, an appropriate SLP instance can be created in the SLEE 342.

The SLP instance communicates via a communication link 344 with one of a number of service applications 346 and/or service data 348 to fulfill the request. In some embodiments, service applications can be of various types and can be grouped based upon the type of services they provide. For example, Parlay service applications or other such service application groups can be used.

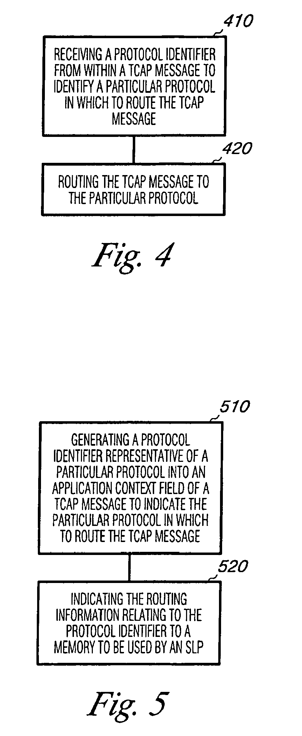

Figures 4 and 5 illustrate various method embodiments for routing TCAP messages. As one of ordinary skill in the art will appreciate upon reading this disclosure, the embodiments can be performed by software/firmware (e.g., computer executable instructions) operable on the devices shown herein or otherwise. The embodiments of the invention, however, are not limited to any particular operating environment or to software written in a particular programming language. Software, application modules, and/or computer executable instructions, suitable for carrying out embodiments of the present invention, can be resident in one or more devices or locations or in several locations.

Unless explicitly stated, the method embodiments described herein are not constrained to a particular order or sequence. Additionally, some of the described method embodiments or elements thereof can occur or be performed at the same point in time.

In block 410, the method of Figure 4 includes receiving a protocol identifier from within a TCAP message to identify a particular protocol in which to route the TCAP message. For example, the TCAP message can be received from an SSF by an SCF as described in Figure 2. Receiving the protocol identifier can also include storing the read and received protocol identifier into memory. The method of Figure 4 also includes routing the TCAP message to the particular protocol in block 420. Routing can, for example, be accomplished by SS7.

In various embodiments, the method can include routing the TCAP messages from multiple protocols. In some embodiments, the protocol identifier can be read and the TCAP messages can be routed, for example, to an INAP, MAP, CS, CAMEL, or other such protocol. If the protocol identifier is within the TCAP message file, the protocol identifier can be read to identify a particular protocol in which to route the TCAP message.

In block 510, the method of Figure 5 includes generating a protocol identifier representative of a particular protocol into an application context field of a TCAP message to indicate the particular protocol in which to route the TCAP message. The generation of the protocol identifier can be accomplished when the TCAP message is created. This can occur, for example, through use of an SSF which executes program instructions to add the protocol identifier when it creates the TCAP message.

The method embodiment shown in Figure 5 also includes indicating the routing information relating to the protocol identifier to a memory to be used by an SLP, at block 520. Various method embodiments can include routing the TCAP messages from a protocol within an SS7 environment. Examples of protocols that can be present within an SS7 environment can include, but are not limited to an INAP, CS, CAMEL, MAP protocols. The TCAP message can also be routed to such protocols, such as within a Parlay environment, for example.

Although specific embodiments have been illustrated and described herein, those of ordinary skill in the art will appreciate that an arrangement calculated to achieve the same techniques can be substituted for the specific embodiments shown. This disclosure is intended to cover adaptations or variations of various embodiments of the invention. It is to be understood that the above description has been made in an illustrative fashion, and not a restrictive one.

Combination of the above embodiments, and other embodiments not specifically described herein will be apparent to those of skill in the art upon reviewing the above description. The scope of the various embodiments of the invention includes other applications in which the above structures and methods are used. Therefore, the scope of various embodiments of the invention should be determined with reference to the appended claims, along with the full range of equivalents to which such claims are entitled.

In the foregoing Detailed Description, various features are grouped together in a single embodiment for the purpose of streamlining the disclosure. This method of disclosure is not to be interpreted as reflecting an intention that the embodiments of the invention require more features than are expressly recited in each claim. Rather, as the following claims reflect, inventive subject matter lies in less than all features of a single disclosed embodiment. Thus, the following claims are hereby incorporated into the Detailed Description, with each claim standing on its own as a separate embodiment.

## Claims

1. A computing device for use in a communication network (100), the computing device being arranged to receive a protocol identifier from within a first transaction capabilities application part, TCAP, message to identify a particular service logic program in which to route the first TCAP message; and arranged to route the first TCAP message to the particular service logic program.

2. The computing device of claim 1, wherein the computing device is arranged to route a TCAP message subsequent to the first TCAP message to the particular service logic program.

3. The computing device of claim 2, wherein the subsequent TCAP message is routed to the particular service logic program based upon the received protocol identifier.

4. The computing device of claim 3, wherein the first TCAP message includes the protocol identifier in an application context field and the subsequent TCAP message has an empty application context field.

5. The computing device of claim 3, wherein the first TCAP message includes the protocol identifier in an application context field and the subsequent TCAP message has an application context field with content that does not match the received protocol identifier.

6. The computing device of any preceding claim, wherein the computing device is a service control point, SCP.

7. The computing device of any preceding claim, wherein a service control function is associated with receiving and routing.

8. A communication network comprising:
a service switching point, SSP; and,
a service control point as claimed in claim 6.

9. A computer implemented method for routing transaction capabilities part, TCAP, messages, comprising:
receiving a protocol identifier from within a TCAP message to identify a particular protocol-specific service logic program in which to route the TCAP message; and,
routing the TCAP message to the particular protocol-specific service logic program.

10. A computer program comprising computer program code means for performing all of the steps of claim 9 when run on a computer.
